# EUROPÄISCHE PATENTSCHRIFT

(11) **EP 1 217 273 B1**
(45) Veröffentlichungstag und Bekanntmachung des Hinweises auf die Patenterteilung: **14.06.2006**
(21) Anmeldenummer: 01125100.6
(22) Anmeldetag: 23.10.2001
(51) Int. Cl.: F16K 31/06

(54) **Elektromagnetventileinrichtung**
Solenoid valve
Soupape électromagnétique

(30) Priorität: 20.12.2000 DE 10063710
(43) Veröffentlichungstag der Anmeldung: 26.06.2002
(73) Patentinhaber: WABCO GmbH & CO. OHG, 30432 Hannover (DE)
(72) Erfinder: Rovira, Juan, 30827 Garbsen (DE); Teichmann, Andreas, 30916 Isernhagen HB (DE)
(74) Vertreter: Schrödter, Manfred

(56) Entgegenhaltungen:
- DE-A- 2 757 803
- FR-A- 1 555 357
- US-A- 3 098 635
- US-A- 3 647 177
- US-A- 3 740 019
- US-A- 3 791 408
- US-A- 4 595 171
- US-A- 5 878 991

## Beschreibung

Die Erfindung betrifft eine Ventileinrichtung gemäß dem Oberbegriff des Patentanspruchs 1.

Eine derartige Ventileinrichtung ist aus der DE 27 57 803 A1 bekannt.

Die bekannte Ventileinrichtung weist einen Ventilsitz und ein Ventilschließglied sowie ein zum Antreiben des Ventilschließgliedes dienendes Betätigungselement auf. Als Betätigungselement dient der Anker eines Elektromagneten. Das Ventilschließglied ist relativ zum Anker, in Richtung auf den Anker zu bzw. in Richtung vom Anker weg, bewegbar am Anker angeordnet. Zwischen dem Anker und dem Ventilschließglied ist eine Feder angeordnet. Der Anker mit dem Ventilschließglied ist durch Bestromung des Elektromagneten von einer ersten Position, z.B. der Offenstellung des Ventils, in eine zweite Position, z.B. die Schließstellung des Ventils, bewegbar.

Eine in der Weise ausgebildete Ventileinrichtung wird im allgemeinen nur mit einem relativ kleinen Durchlaßquerschnitt, das heißt, mit einer relativ kleinen Nennweite, ausgestattet, um die Betätigungskraft für das Ventil möglichst klein zu halten. Ein großer Durchlaßquerschnitt würde eine relativ hohe Betätigungskraft und somit den Einsatz von starken Elektromagneten erfordern, die wiederum relativ groß bauen.

Aus der US 4 595 171 A ist eine Ventileinrichtung bekannt, welche im wesentlichen die gleichen Merkmale aufweist, wie die vorstehend beschriebene, aus der DE 27 57 803 A1 bekannte Ventileinrichtung. Jedoch besitzt das Ventilschließglied der aus der US 4 595 171 A bekannten Ventileinrichtung einen sich in Richtung auf den Ventilsitz zu konisch verjüngend Bereich. Der Ventilsitz wird von dem inneren Randbereich eines in der Ventileinrichtung angeordneten rohrförmigen Körpers gebildet.

Bei dieser bekannten Ventileinrichtung wird das Ventilschließglied in einer abgestuften Bohrung des als Betätigungselement für das Ventil dienenden Ankers eines Elektromagneten geführt. Das Ventilschließglied weist auf seinem Umfang einen umlaufenden Vorsprung auf, mit welchem es an einer Stufe der abgestuften Bohrung des Ankers anliegt. Eine in der abgestuften Bohrung angeordnete Feder beaufschlagt das Ventilschließglied in Richtung auf den Ventilsitz zu und hält so das Ventilschließglied über dessen umlaufenden Vorsprung in Anlage mit der Stufe der Bohrung des Ankers. Die Feder stützt sich mit ihrem dem umlaufenden Vorsprung des Ventilschließgliedes abgewandten Ende an einem ringförmigen Körper ab, welcher in die abgestufte Bohrung des Ankers eingepresst ist und das Ventilschließglied auf einem Teil seiner axialen Erstreckung umgibt.

Bei der Montage des Ventilschließgliedes wird dieses zusammen mit der Feder in die abgestufte Bohrung des Ankers eingeführt. Anschließend wird der ringförmige Körper auf das Ventilschließglied aufgeschoben und so weit in die abgestufte Bohrung des Ankers hineingedrückt bis er mit seinem der Feder abgewandten Ende bündig mit dem Rand der abgestuften Bohrung abschließt.

Von Nachteil ist bei dieser bekannten Ventileinrichtung, daß zum Eindrücken des ringförmigen Körpers in die abgestufte Bohrung des Ankers ein spezielles Werkzeug benötigt wird und daß es nicht ganz auszuschließen ist, daß bei der Handhabung des Ventilschließgliedes, der Feder und des Ankers zum Zwecke der Montage die Feder oder auch das Ventilschließglied aus der abgestuften Bohrung des Ankers herausgleiten und verloren gehen kann, so lange das Ventilschließglied und die Feder noch nicht durch den ringförmigen Körper in Richtung der Längsachse des Ankers gesichert sind.

Der Erfindung liegt deshalb die Aufgabe zugrunde, eine Ventileinrichtung der eingangs erwähnten Art zu verbessern.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung bietet insbesondere den Vorteil, daß die Ventileinrichtung auch bei Ausstattung mit einer relativ großen Nennweite mit einer verhältnismäßig geringen Betätigungsenergie betreibbar ist. Die Nennweite entspricht dabei annähernd der Dichtweite des Ventils. Unter Nennweite versteht man in diesem Zusammenhang den Bohrungsdurchmesser des Ventilsitzes und unter Dichtweite versteht man den größten Durchmesser des Ventilsitzes, mit welchem der Ventilsitz bei geschlossenem Ventil mit dem Ventilschließglied noch Berührung hat. Bei der erfindungsgemäßen Ventileinrichtung entspricht der größte Durchmesser des Ventilsitzes annähernd dem Bohrungsdurchmesser des Ventilsitzes, wobei der Ventilsitz mit dem Ventilschließglied annähernd eine Linienberührung hat.

Die Dichtweite eines Ventils ist maßgebend für seine Dichtkraft. Hat das Ventil eine große Dichtweite und somit eine große Dichtkraft, so ist eine, z.B. von einer relativ starken Feder erzeugte, relativ große Rückstellkraft erforderlich, um das Ventil nach einem Schließvorgang von seiner Schließstellung wieder in seine Offenstellung zu bringen. Demzufolge ist zum Schließen des Ventils eine relativ große Betätigungskraft erforderlich, um die Rückstellkraft zu überwinden. Hat das Ventil dagegen eine Dichtweite, welche annähernd seiner Nennweite entspricht, wie dies bei der erfindungsgemäßen Ventileinrichtung der Fall ist, so ist die zum Öffnen des Ventils erforderliche Rückstellkraft relativ klein. Die bei einem Schließvorgang des Ventils zum Überwinden der Rückstellkraft erforderliche Betätigungskraft ist dann ebenfalls relativ klein. Die erfindungsgemäße Ventileinrichtung kann deshalb mit einer relativ großen Nennweite ausgestattet werden, wodurch der Vorteil von kurzen Be- und Entlüftungszeiten an den an die Ventileinrichtung angeschlossenen Druckluftgeräten erzielt wird.

Wenn zur Betätigung der Ventileinrichtung eine Elektromagnetanordnung eingesetzt wird, kann diese, aufgrund der zum Betätigen des Ventils erforderlichen relativ kleinen Betätigungskraft, auch relativ klein gehalten werden, was neben dem Vorteil eines geringeren Platzbedarfes zusätzlich noch einen Gewichts- und einen Kostenvorteil ergibt.

Dadurch, daß das Ventilschließglied konus- oder kugelförmig ausgebildet ist und aus einem relativ harten Material besteht, und dadurch daß der Ventilsitz von der umlaufenden Kante einer Durchlaßöffnung gebildet wird, wird bei geschlossenem Ventil annähernd eine Linienberührung zwischen Ventilsitz und Ventilschließglied erreicht.

Durch die Anordnung des Dämpfungselementes zwischen Ventilschließglied und Betätigungselement wird die Aufschlagenergie absorbiert und dadurch der Verschleiß am Ventilschließglied verringert. Der Verschleiß bzw. die plastische Verformung, welche durch ein ungedämpftes Anschlagen entstehen würde, hätte zur Folge, daß sich die Anlagefläche des Ventilschließgliedes am Ventilsitz vergrößern würde. Die Folge wäre eine unerwünschte Vergrößerung der Dichtweite des Ventils und eine verschleißbedingte große Leckage.

Die Erfindung wird im folgenden anhand von Zeichnungen unter Nennung weiterer Vorteile näher erläutert.

Es zeigen
- Fig. 1: eine bevorzugte Ausführungsform der erfindungsgemäßen Ventileinrichtung als 2/2-Wegeventil in Schnittdarstellung und
- Fig. 2: eine Ausschnittsvergrößerung eines Teils der Ventileinrichtung gemäß Fig. 1.

In den Figuren werden gleiche Bezugszeichen für einander entsprechende Teile verwendet.

Die in den Figuren dargestellte Ventileinrichtung ist als elektromagnetisch betätigbares 2/2-Wegeventil ausgebildet und dient zur Steuerung eines Druckmittelstromes in Abhängigkeit von einem als Betätigungsenergie verwendeten elektrischen Signal, d. h. es kann zwischen einem Durchlassen und einem Absperren eines Druckmittelstromes umgeschaltet werden. Die Erfindung ist jedoch nicht auf diese Ausführungsform beschränkt, sondern erfaßt auch beliebige andere Ausführungsformen, wie z. B. ein 3/2-Wegeventil. Bei der nachfolgend beschriebenen Ventileinrichtung dient als Betätigungsenergie elektrische Energie, die vorzugsweise als elektrisches Digitalsignal der Ventileinrichtung zugeführt wird.

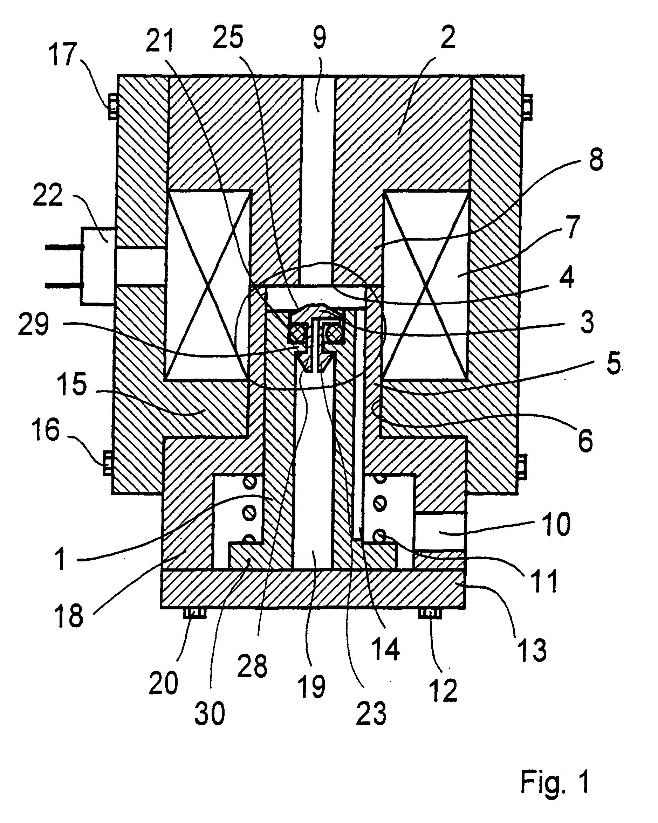

Es wird im folgenden zunächst der Aufbau und die Funktionsweise der Ventileinrichtung anhand der Fig. 1 beschrieben.

Die Ventileinrichtung weist ein aus mehreren Gehäuseteilen bestehendes Ventilgehäuse (2, 13, 15, 18) auf, wobei die Gehäuseteile mittels Schrauben (12, 20, 16, 17) miteinander verbunden sind. Um eine gute Dichtigkeit zu erzielen, sind zwischen den Anlageflächen der Gehäuseteile Dichtungen angeordnet, die in der Zeichnung nicht dargestellt sind.

Das Ventilgehäuse (2, 13, 15, 18) weist einen als Druckmitteleinlaß dienenden Druckmittelkanal (10) und einen als Druckmittelauslaß dienenden Druckmittelkanal (9) auf, an welche Druckmittelleitungen angeschlossen werden können.

Zum Absperren des Druckmittelflusses durch die Ventileinrichtung ist ein Ventil (4, 3) vorgesehen, welches aus einem Ventilsitz (4) und einem auf diesen zu bzw. von diesem weg bewegbaren Ventilschließglied (3) besteht. Der Ventilsitz (4) ist an dem im Ventilgehäuse (2, 13, 15, 18) gelegenen Ende des als Druckmittelauslaß dienenden Druckmittelkanals (9) angeordnet bzw. wird von dem Ende des Druckmittelkanals (9) gebildet, welches dem Ventilschließglied (3) zugewandt ist.

In eine im Gehäuseteil (15) des Ventilgehäuses (2, 13, 15, 18) gleichachsig zum Ventilsitz (4) angeordnete Gehäuseausnehmung (6) erstreckt sich ein rohrförmiges Teil (5) des Gehäuseteiles (18) des Ventilgehäuses (2, 13, 15, 18) hinein. In dem rohrförmigen Teil (5) ist ein als Betätigungselement für das Ventil (3, 4) dienender Anker (1) einer Elektromagnetanordnung in Richtung auf den Ventilsitz (4) zu bzw. in Richtung vom Ventilsitz (4) weg bewegbar angeordnet.

Der Anker (1) weist eine Ausnehmung (19) auf, die in Richtung der Längsachse des Ankers (1) verläuft. In dem dem Ventilsitz (4) zugewandten Endbereich der Ausnehmung (19) weist der Anker (1) einen sich radial nach innen erstreckenden ringförmigen Vorsprung (29) auf. An seinem dem Ventilsitz (4) abgewandten Ende besitzt der Anker (1) einen sich radial nach außen erstreckenden Kragen (30). Im Gehäuseteil (18) ist eine Feder (11) so angeordnet, daß sie sich mit ihrem einen Ende an einer Wand des Gehäuseteiles (18) abstützt und mit ihrem anderen Ende den Kragen (30) des Ankers (1) in Richtung vom Ventilsitz (4) weg beaufschlagt.

Das Ventilschließglied (3) wird von einem zylindrischen Körper gebildet, der auf seiner dem Ventilsitz (4) zugewandten Seite einen sich in Richtung auf den Ventilsitz (4) zu konisch verjüngenden Bereich (25) aufweist. Dadurch, daß das Ventilschließglied (3) den sich konisch verjüngenden Bereich (25) aufweist und der Ventilsitz (4) von der umlaufenden Kante des Druckmittelkanals (9) gebildet wird, wobei das Ventilschließglied (3) beim Schließvorgang des Ventils (4, 3) mit seinem schräg zur Längsachse des Ventilsitzes (4) verlaufenden Bereich seiner Ventilschließfläche -sich konisch verjüngender Bereich (25)- an der umlaufenden Kante des Druckmittelkanals (9) zur Anlage kommt, hat das Ventilschließglied (3) annähernd eine Linienberührung mit dem Ventilsitz (4). Durch diese Ausbildung von Ventilsitz (4) und Ventilschließglied (3) entspricht die Nennweite des Ventils (4, 3) annähernd der Dichtweite des Ventils (4, 3). Aufgrund der sehr geringen Differenz zwischen der Nennweite und der Dichtweite des Ventils (4, 3) verringert sich die Dichtkraft des Ventils (4, 3) und somit auch die zur Betätigung des Ventils (4, 3) erforderliche Kraft.

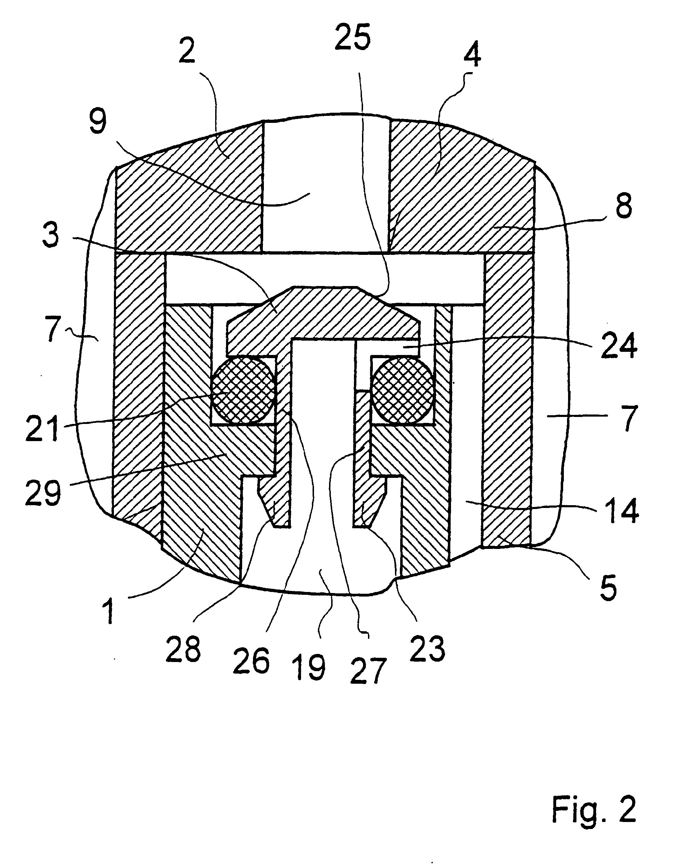

Auf seiner dem Ventilsitz (4) abgewandten Seite weist das Ventilschließglied (3) mehrere Fortsätze (26, 27) auf -Fig.2-, die sich in Richtung der Längsachse des Ventilschließgliedes (3) verlaufend vom Ventilschließglied (3) weg erstrecken. Jeder dieser Fortsätze (26, 27) besitzt an seinem freien Ende einen sich nach außen erstreckenden nasenartigen Vorsprung (23, 28).

Das Ventilschließglied (3) ist so im Anker (1) angeordnet, daß seine Fortsätze (26, 27) sich durch den ringförmigen Vorsprung (29) in der Ausnehmung (19) des Ankers (1) hindurcherstrecken, wobei ihre nasenartigen Vorsprünge (23, 28) den ringförmigen Vorsprung (29) hintergreifen. Das Ventilschließglied (3) bzw. ein Teil davon ist auf diese Art und Weise als verrastbarer Einsatz ausgebildet, der in Richtung der Längsachse des als Betätigungselement dienenden Ankers (1) bewegbar mit dem Anker (1) verbunden ist.

Zwischen der dem Ventilsitz (4) abgewandten Seite des Ventilschließgliedes (3) und dem ringförmigen Vorsprung (29) in der Ausnehmung (19) des Ankers (1) ist ein Dämpfungselement (21) angeordnet, welches beim Schließen des Ventils (4, 3) zum Dämpfen des Aufschlags des Ventilschließgliedes (3) auf dem Ventilsitz (4) dient. Das Dämpfungselement (21) besteht vorzugsweise aus einem elastisch verformbaren Material, wie z.B. Gummi oder Kunststoff, und kann z. B. als 0-Ring ausgebildet sein. Der Querschnitt des Dämpfungselementes (21) sowie der Abstand zwischen dem ringförmigen Vorsprung (29) in der Ausnehmung (19) des Ankers (1) und der diesem zugewandten Seite des Ventilschließgliedes (3) sind so bemessen, daß das Dämpfungselement (21) vorzugsweise nur geringfügig vorgespannt ist, wenn das Ventilschließglied (3) mit seinen nasenartigen Vorsprüngen (23, 28) an der dem Ventilschließglied (3) abgewandten Seite des ringförmigen Vorsprungs (29) in der Ausnehmung (19) des Ankers (1) anliegt.

Das Ventilschließglied (3) ist in seiner axialen Erstreckung so bemessen, daß es sich in Richtung auf den Ventilsitz (4) zu nur so weit über den Anker (1) hinauserstreckt, daß ein sicheres Schließen des Ventils (4, 3) gewährleistet ist. Das Ventilschließglied (3) kann in seiner axialen Erstreckung auch so bemessen sein, daß der Anker (1) auch dann nicht auf den den Ventilsitz (4) aufweisenden Teil des Gehäuses aufschlagen kann, wenn das Ventilschließglied (3) bei einem Schließvorgang des Ventils (4, 3) gegen die Kraft des Dämpfungselementes (21) weiter in die Ausnehmung (19) des Ankers (1) hineingeschoben wird. Bedingt durch den bei einer solchen Ausführung vorhandenen Luftspalt zwischen dem Anker (1) und dem den Ventilsitz (4) aufweisenden Teil des Gehäuses kann der Anker (1) sich mit seinem Ventilschließglied (3) beim Öffnen des Ventils (4, 3) leichter von dem den Ventilsitz (4) aufweisenden Teil des Gehäuses lösen. Ein Haften des Ankers (1) aufgrund eines Öl- bzw. Fettfilmes zwischen Anker (1) und dem den Ventilsitz (4) aufweisenden Teiles des Gehäuses wird so vermieden.

Wie vorstehend bereits erwähnt, kann durch das Vorhandensein des Dämpfungselementes (21) zwischen dem Anker (1) und dem Ventilschließglied (3) das Ventilschließglied (3) bei einem Aufprall auf den Ventilsitz (4), infolge einer Ventilbetätigung, nachgeben.

Das rohrförmige Teil (5) des Gehäuseteils (18) des Ventilgehäuses (2, 13, 15, 18) dient als Führungseinrichtung für den darin beweglichen Anker (1). Der Anker (1) weist einen Druckmittelkanal (14) auf, über den im geöffneten Zustand des Ventils (4, 3) der Ventileinrichtung, wie in der Fig. 1 gezeigt, das Druckmittel von dem Einlaßkanal (10) zu dem Auslaßkanal (9) strömen kann. Zur Gewichtsersparnis ist der Anker (1) außerdem mit dem von der Ausnehmung (19) gebildeten Hohlraum versehen.

Die zuvor erwähnte Elektromagnetanordnung weist neben dem Anker (1) noch einen durch einen abgestuften Abschnitt des Gehäuseteiles (2) gebildeten Kern (8), eine Spule (7) sowie ein von dem Gehäuseteil (15) gebildetes Joch auf.

Die Spule (7) ist unbeweglich bezüglich des Ventilgehäuses (2, 13, 15, 18) angeordnet und umgibt den Kern (8) sowie das rohrförmig ausgebildeten Teil (5) des Gehäuseteils (18). Die Spule (7) dient zur Umwandlung der elektrischen Betätigungsenergie in eine Magnetkraft. Bei Einspeisung eines ausreichend starken elektrischen Stromes bewirkt die Spule (7) in Verbindung mit dem Joch (15) und dem Kern (8) eine Bewegung des Ankers (1) in Richtung des Kerns (8). Die Spule (7) besteht aus elektrisch leitfähigem Draht. Zur Einspeisung des elektrischen Stroms in die Spule (7) ist an einer Öffnung des Gehäuseteils (15) ein elektrisches Anschlußelement (22) angeordnet, das mit der Spule (7) elektrisch verbunden ist.

Der Anker (1) wird durch die Feder (11) in der in der Fig. 1 dargestellten Stellung gehalten, solange in der Spule (7) kein für die Überwindung der Federkraft ausreichender Strom fließt. In diesem Zustand ist das Ventil (4, 3) der Ventileinrichtung geöffnet. Druckmittel kann von dem als Druckmitteleinlaß dienenden Druckmittelkanal (10) zu dem als Druckmittelauslaß dienenden Druckmittelkanal (9) strömen.

Die miteinander magnetisch in Wirkverbindung stehenden Teile (1, 2, 8, 15) sind aus magnetisch leitfähigem Material, z. B. aus einem weichmagnetischen Werkstoff, insbesondere aus Stahl, gefertigt. Die Gehäuseteile (13, 18, 5) sind aus magnetisch nicht leitfähigem Material, z. B. Kunststoff oder Messing, gefertigt. In einer vorteilhaften Weiterbildung ist, aufgrund des oben beschriebenen Luftspaltes, der Anker (1) aus oberflächengeschütztem Automatenstahl hergestellt. Dies hat gegenüber sonst verwendeten Ankern aus Magnetventil-Niro-Material den Vorteil einer höheren Magnetkraft.

Beim Einspeisen eines ausreichend starken elektrischen Stromes in die Spule bewegt sich der Anker (1) in Richtung auf den Kern (8) zu, bis das Ventilschließglied (3) auf den Ventilsitz (4) aufprallt. Nach dem Abklingen von eventuell auftretenden Einschwingvorgängen liegt dann das Ventilschließglied (3) an dem Ventilsitz (4) an. Das Ventil (4, 3) ist dann geschlossen, wodurch der als Druckmitteleinlaß dienende Druckmittelkanal (10) dann gegen den als Druckmittelauslaß dienenden Druckmittelkanal (9) abgesperrt wird. Das Ventilschließglied (3) hat dann annähernd eine Linienberührung mit dem Ventilsitz (4).

Wie insbesondere aus der Fig. 2 zu erkennen ist, weist das Ventilschließglied (3) an seiner der Ventilschließfläche abgewandten Seite die beiden an den Fortsätzen (26, 27) des Ventilschließgliedes (3) angeordneten nasenartigen Vorsprünge (23, 28) auf, die zur Befestigung des Ventilschließgliedes (3) an dem Anker (1) dienen und in montiertem Zustand des Ventilschließgliedes (3) den ringförmigen Vorsprung (29) in der Ausnehmung (19) des Ankers (1) hintergreifen. Ausgehend von dem Ventilsitz (4) ist hinter dem Ventilschließglied (3) bzw. hinter der Ventilschließfläche das Dämpfungselement (21) angeordnet.

Das Ventilschließglied (3) weist des weiteren z.B. als Nuten (24) ausgebildete Öffnungen auf, durch welche die Ausnehmung (19) im Anker (1) mit dem Druckmittelkanal (10) bzw. dem Kanal (14) verbunden ist. Hierdurch wird, wenn der Anker (1) in einem 3/2-Wege-Elektromagnetventil eingesetzt wird, eine Belüftung der Ausnehmung (19) im Anker (1) zur Vermeidung von Überdruck ermöglicht. Eine sonst übliche Beatmungsbohrung im Anker kann deshalb entfallen.

Das Dämpfungselement (21) besteht in einer bevorzugten Ausgestaltung der Erfindung aus einem Elastomer, wie z. B. Gummi, in Form eines O-Ringes. Dies hat den Vorteil, daß das Dämpfungselement (21) eine Vielzahl von Verformungen infolge von Ventilbetätigungen beschädigungsfrei übersteht. Weitere ebenfalls vorteilhafte Varianten zur Ausbildung des Dämpfungselementes (21) sind die Verwendung aufvulkanisierten Gummis, thermoplastischer Elastomere oder aus Metall gefertigter Teile, wie z. B. ein Federblechteil, eine Tellerfeder oder eine Spiralfeder.

Das Ventilschließglied (3) kann in Richtung auf den Ventilsitz (4) zu sich konisch verjüngend ausgebildet sein bzw. es kann einen in Richtung auf den Ventilsitz (4) zu sich konisch verjüngenden Bereich (25) oder einen halbkugelförmigen Bereich aufweisen, der beim Schließen des Ventils (4, 3) am Ventilsitz (4) zur Anlage kommt. Das Ventilschließglied (3) kann aber auch kugelförmig ausgebildet sein oder eine andere für eine annähernd linienförmige Berührung mit dem Ventilsitz geeignete Form aufweisen.

Von Bedeutung für die Erfindung ist, daß das Ventilschließglied (3) so ausgebildet ist, daß seine Ventilschließfläche einen schräg zur Längsachse des Ventilsitzes (4) verlaufenden oder einen auf den Ventilsitz (4) zu gewölbten Bereich aufweist und daß der Ventilsitz (4) eine Form aufweist, welche annähernd eine Linienberührung zwischen dem Ventilsitz (4) und der Ventilschließfläche des Ventilschließgliedes (3) erlaubt.

Der Ventilsitz (4) kann z.B. von dem Rand einer Durchlaßöffnung für Druckmittel gebildet werden, die in der eine Druckmitteleingangskammer von einer Druckmittelausgangskammer trennenden Wand des Ventilgehäuses angeordnet ist. Die Durchlaßöffnung kann aber auch von einer als Auslaßkanal oder gegebenenfalls als Einlaßkanal dienenden Druckmittelleitung des Ventilgehäuses gebildet werden, wie es im Ausführungsbeispiel beschrieben ist. Die den Ventilsitz bildende umlaufende Kante (Rand) der Durchgangsöffnung kann leicht abgerundet sein. Um einer Linienberührung zwischen Ventilsitz und Ventilschließglied möglichst nahe zu kommen, ist es jedoch von Vorteil, den Rand der Durchgangsöffnung möglichst scharfkantig auszubilden.

Es ist gemäß der Erfindung auch möglich, den Ventilsitz so auszubilden, daß er sich in Richtung auf das Ventilschließglied zu trichterförmig erweitert. Bei einer solchen Ausbildung des Ventilsitzes wird das Ventilschließglied vorteilhafterweise zylindrisch oder auch kugelförmig ausgebildet, um beim Schließen des Ventils wenigstens annähernd eine Linienberührung zwischen Ventilschließglied und Ventilsitz zu erreichen.

Zumindest der die Ventilschließfläche aufweisende Bereich des Ventilschließgliedes (3) soll gemäß der Erfindung aus einem harten Material wie z.B. Stahl oder einem sehr widerstandsfähigen Kunststoff bestehen.

Die Ventileinrichtung kann sowohl in hydraulisch als auch in pneumatisch betriebenen Einrichtungen und Anlagen eingesetzt werden. Als Betätigungsenergie kann elektrische Energie oder eine Druckmittelenergie benutzt werden. Wird Druckmittel als Betätigungsenergie eingesetzt, so wird als Betätigungselement für das Ventilschließglied ein Kolben verwendet, der mit dem Druckmittel beaufschlagbar ist.

## Patentansprüche

1. Ventileinrichtung mit folgenden Merkmalen:
a) es sind ein Druckmitteleinlaß (10) und ein Druckmittelauslaß (9) vorgesehen, die über ein Ventil (4, 3) wahlweise miteinander verbindbar oder gegeneinander absperrbar sind;
b) das Ventil (4, 3) weist einen Ventilsitz (4) und ein am Ventilsitz (4) zur Anlage bringbares Ventilschließglied (3) auf;
c) es ist ein Betätigungselement (1) zum Betätigen des Ventils (4, 3) vorgesehen;
d) das Ventilschließglied (3) ist in Richtung der Längsachse des Betätigungselementes (1) bewegbar am Betätigungselement (1) angeordnet;
e) zwischen dem Ventilschließglied (3) und dem Betätigungselement (1) ist ein Dämpfungselement (21) angeordnet, welches bei einem Schließvorgang des Ventils (4, 3) den Aufprall des Ventilschließgliedes (3) auf den Ventilsitz (4) dämpft;
f) der Ventilsitz (4) und das Ventilschließglied (3) sind so ausgebildet, daß die Dichtweite des Ventils (4, 3) annähernd der Nennweite des Ventils (4, 3) entspricht;
g) der Ventilsitz (4) und das Ventilschließglied (3) sind so ausgebildet, daß der Ventilsitz (4) und das Ventilschließglied (3) wenigstens annähernd eine Linienberührung haben, wenn das Ventilschließglied (3) am Ventilsitz (4) zur Anlage kommt;
**gekennzeichnet durch** die folgenden Merkmale:
h) wenigstens der die Ventilschließfläche aufweisende Bereich des Ventilschließgliedes (3) besteht aus einem harten Material.
i) das Ventilschließglied (3) bzw. ein Teil davon ist als verrastbarer Einsatz ausgebildet, der an dem Betätigungselement (1) montierbar ist.

2. Ventileinrichtung nach Anspruch 1, **dadurch gekennzeichnet, daß** der Ventilsitz (4) von einer dem Ventilschließglied (3) gegenüberliegenden umlaufenden Kante einer Durchlaßöffnung für das Druckmittel gebildet wird.

3. Ventileinrichtung nach Anspruch 1, **dadurch gekennzeichnet, daß** das Ventilschließglied (3) sich in Richtung auf den Ventilsitz (4) zu konisch verjüngt oder einen sich in Richtung auf den Ventilsitz (4) zu konisch verjüngenden Bereich aufweist.

4. Ventileinrichtung nach wenigstens einem der vorhergehenden Ansprüche, **dadurch gekennzeichnet, daß** der Ventilsitz (4) so ausgebildet ist, daß er sich in Richtung auf das Ventilschließglied (3) zu trichterförmig erweitert.

5. Ventileinrichtung nach Anspruch, 1 **dadurch gekennzeichnet, daß** das Dämpfungselement (21) aus einem Elastomer besteht.

6. Ventileinrichtung nach wenigstens einem der vorhergehenden Ansprüche, **dadurch gekennzeichnet, daß** das Dämpfungselement (21) eine Ringform hat.

7. Ventileinrichtung nach wenigstens einem der vorhergehenden Ansprüche, **dadurch gekennzeichnet, daß** das Dämpfungselement als Feder ausgebildet ist.

8. Ventileinrichtung nach Anspruch 1, **dadurch gekennzeichnet, daß** zum Betätigen des Ventils (3, 4) ein eine Spule (7) und einen Anker aufweisender Elektromagnet (1, 7, 8, 15) dient, wobei der Anker als Betätigungselement (1) für das Ventil (3, 4) dient.

9. Ventileinrichtung nach wenigstens einem der vorhergehenden Ansprüche, **dadurch gekennzeichnet, daß** das Dämpfungselement (21) wenigstens eine mit einer im Anker (1) angeordneten Ausnehmung (19) in Verbindung stehende Öffnung (24) aufweist, die für eine Beatmung der Ausnehmung (19) des Ankers (1) dient.

10. Ventileinrichtung nach wenigstens einem der vorhergehenden Ansprüche, **dadurch gekennzeichnet, daß** das Ventilschließglied (3) so am Betätigungselement (1) angeordnet und in Richtung seiner axialen Erstreckung so bemessen ist, daß beim Schließvorgang des Ventils (4, 3) ein Anschlagen des Betätigungselementes (1) an dem den Ventilsitz (4) aufweisenden Teil des Gehäuses der Ventileinrichtung verhindert wird.

11. Ventileinrichtung nach Anspruch 8, **dadurch gekennzeichnet, daß** der Anker (1) aus oberflächengeschütztem Automatenstahl hergestellt ist.

## Claims

1. Valve device having the following features:
a) there are provided a pressure medium inlet (10) and a pressure medium outlet (9), which are arranged to be connected to one another or shut off from one another, as desired, by means of a valve (4, 3);
b) the valve (4, 3) comprises a valve seat (4) and a valve closure member (3) which is arranged to be brought into contact with the valve seat (4);
c) an actuating element (1) is provided for actuation of the valve (4, 3);
d) the valve closure element (3) is arranged on the actuating element (1) so as to be movable in the direction of the longitudinal axis of the actuating element (1);
e) arranged between the valve closure member (3) and the actuating element (1) is a damping element (21), which damps the impact of the valve closure member (3) on the valve seat (4) in the process of closure of the valve (4, 3);
f) the valve seat (4) and the valve closure member (3) are so formed that the sealing diameter of the valve (4, 3) corresponds approximately to the nominal diameter of the valve (4, 3);
g) the valve seat (4) and the valve closure member (3) are so formed that the valve seat (4) and the valve closure member (3) have at least approximately linear contact when the valve closure member (3) comes to rest against the valve seat (4);
**characterised by** the following features:
h) at least that region of the valve closure member (3) which comprises the valve closure surface is made from a hard material;
i) the valve closure member (3) or a part thereof is in the form of an interlockable insert, which is arranged to be mounted on the actuating element (1).

2. Valve device according to claim 1, **characterised in that** the valve seat (4) is formed by a peripheral edge of an opening of a passageway for the pressure medium, which edge is located opposite the valve closure member (3).

3. Valve device according to claim 1, **characterised in that** the valve closure member (3) tapers conically in the direction towards the valve seat (4) or has a region which tapers conically in the direction towards the valve seat (4).

4. Valve device according to at least one of the preceding claims, **characterised in that** the valve seat (4) is so formed that it widens out in a funnel shape in the direction towards the valve closure member (3).

5. Valve device according to claim 1, **characterised in that** the damping element (21) is made from an elastomer.

6. Valve device according to at least one of the preceding claims, **characterised in that** the damping element (21) has an annular shape.

7. Valve device according to at least one of the preceding claims, **characterised in that** the damping element is in the form of a spring.

8. Valve device according to claim 1, **characterised in that** an electromagnet (1, 7, 8, 15) comprising a coil (7) and an armature serves for actuation of the valve (3, 4), the armature serving as actuating element (1) for the valve (3, 4).

9. Valve device according to at least one of the preceding claims, **characterised in that** the damping element (21) has at least one opening (24) in communication with a recess (19) arranged in the armature (1), which opening (24) serves for venting of the recess (19) of the armature (1).

10. Valve device according to at least one of the preceding claims, **characterised in that** the valve closure member (3) is so arranged on the actuating element (1) and is so dimensioned in the direction of its axial extent that the actuating element (1) is prevented, in the process of closure of the valve (4, 3), from hitting that part of the housing of the valve device which comprises the valve seat (4).

11. Valve device according to claim 8, **characterised in that** the armature (1) is produced from surface-protected free-machining steel.

## Revendications

1. Soupape avec les caractéristiques suivantes :
a) sont prévus une admission de moyen de pression (10) et un échappement de moyen de pression (9), qui peuvent être reliés l'un avec l'autre ou être coupés l'un par rapport à l'autre par l'intermédiaire d'une soupape (4, 3) au choix ;
b) la soupape (4, 3) présente un siège de soupape (4) et un élément de fermeture de soupape (3) pouvant venir en contact du siège de soupape (4) ;
c) un élément d'actionnement (1) est prévu pour l'actionnement de la soupape (4, 3) ;
d) l'élément de fermeture de soupape (3) est disposé déplaçable sur l'élément d'actionnement (1) dans la direction de l'axe longitudinal de l'élément d'actionnement (1) ;
e) entre l'élément de fermeture de soupape (3) et l'élément d'actionnement (1) est disposé un élément d'amortissement (21), qui, lors d'un processus de fermeture de la soupape (4, 3), amortit l'impact de l'élément de fermeture de soupape (3) sur le siège de soupape (4) ;
f) le siège de soupape (4) et l'élément de fermeture de soupape (3) sont réalisés de sorte que la largeur de la soupape (4, 3) correspond approximativement au diamètre nominal de la soupape (4, 3) ;
g) le siège de soupape (4) et l'élément de fermeture de soupape (3) sont réalisés de sorte que le siège de soupape (4) et l'élément de fermeture de soupape (3) possèdent au moins approximativement un contact linéaire, lorsque l'élément de fermeture de soupape (3) vient en contact du siège de soupape (4) ;
**caractérisée par** les caractéristiques suivantes :
h) au moins la zone présentant la surface de fermeture de soupape de l'élément de fermeture de soupape (3) est constituée d'un matériau dur.
i) l'élément de fermeture de soupape (3) ou une partie de celui-ci est réalisé sous la forme d'un insert encliquetable, qui peut être monté sur l'élément d'actionnement (1).

2. Soupape selon la revendication 1, **caractérisée en ce que** le siège de soupape (4) est formé par un bord rotatif en vis-à-vis de l'élément de fermeture de soupape (3) d'un orifice de passage pour le moyen de pression.

3. Soupape selon la revendication 1, **caractérisée en ce que** l'élément de fermeture de soupape (3) se rétrécit de façon conique en direction du siège de soupape (4) ou présente une zone se rétrécissant de façon conique en direction du siège de soupape (4).

4. Soupape selon au moins l'une des revendications précédentes, **caractérisée en ce que** le siège de soupape (4) est réalisé de sorte qu'il s'élargit sous la forme d'un entonnoir en direction de l'élément de fermeture de soupape (3).

5. Soupape selon la revendication 1, **caractérisée en ce que** l'élément d'amortissement (21) est constitué d'un élastomère.

6. Soupape selon au moins l'une des revendications précédentes, **caractérisée en ce que** l'élément d'amortissement (21) possède une forme annulaire.

7. Soupape selon au moins l'une des revendications précédentes, **caractérisée en ce que** l'élément d'amortissement est réalisé sous la forme d'un ressort.

8. Soupape selon la revendication 1, **caractérisée en ce que**, en vue de l'actionnement de la soupape (3, 4), un électroaimant (1, 7, 8, 15) présentant une bobine (7) et un induit est utilisé, dans lequel l'induit est utilisé en tant qu'élément d'actionnement (1) pour la soupape (3, 4).

9. Soupape selon au moins l'une des revendications précédentes, **caractérisée en ce que** l'élément d'amortissement (21) présente une ouverture fixe (14) reliée à un évidement (19) disposé dans l'induit (1), qui est utilisée pour une aération de l'évidement (19) de l'induit (1).

10. Soupape selon au moins l'une des revendications précédentes, **caractérisée en ce que** l'élément de fermeture de soupape (3) est disposé sur l'élément d'actionnement (1) et est dimensionné en direction de son étendue axiale de sorte que, lors d'un processus de fermeture de la soupape (4, 3), une butée de l'élément d'actionnement (1) est empêchée sur la partie présentant le siège de soupape (4) du boîtier de soupape.

11. Soupape selon la revendication 8, **caractérisée en ce que** l'induit (1) est fabriqué en acier de décolletage protégé en surface.
